# EUROPÄISCHE PATENTSCHRIFT

(11) **EP 3 680 083 B1**
(45) Veröffentlichungstag und Bekanntmachung des Hinweises auf die Patenterteilung: **12.06.2024**
(21) Anmeldenummer: 19215696.6
(22) Anmeldetag: 12.12.2019
(51) Int. Cl.: B29C 44/58, B29C 44/34, B29C 37/00, B29C 33/44, B29C 33/00

(54) **FORMWERKZEUG ZUM HERSTELLEN EINES GESCHÄUMTEN INTERIEUR-BAUTEILS FÜR EIN KRAFTFAHRZEUG**
MOULD FOR PRODUCING A FOAMED INTERNAL COMPONENT FOR A MOTOR VEHICLE
OUTIL DE MOULAGE PERMETTANT DE FABRIQUER UN COMPOSANT INTÉRIEUR EXPANSÉ POUR UN VÉHICULE À MOTEUR

(30) Priorität: 10.01.2019 DE 202019100095 U
(43) Veröffentlichungstag der Anmeldung: 15.07.2020
(73) Patentinhaber: Motherson Innovations Company Limited, London EC2N 2AX (GB)
(72) Erfinder: Masch, Thomas, 93333 Schwaig (DE); Richter, Detlef, 93354 Siegenburg (DE)
(74) Vertreter: Westphal, Mussgnug & Partner Patentanwälte mbB

(56) Entgegenhaltungen:
- WO-A1-2012/025094
- WO-A2-2010/139307
- DE-A1- 3 724 316
- DE-A1- 10 211 631
- DE-A1-102016 203 402
- DE-T2- 60 118 614
- DE-T5-112013 000 921
- US-A- 4 968 465

## Beschreibung

Die vorliegende Erfindung betrifft ein Formwerkzeug zum Herstellen eines geschäumten Interieur-Bauteils für ein Kraftfahrzeug.

Geschäumte Interieur-Bauteile im Sinne der vorliegenden Beschreibung kommen beispielsweise dann zum Einsatz, wenn das betreffende Interieur-Bauteil ganz oder teilweise weich ausgestaltet werden soll. Unter "weich" soll ein Bauteil verstanden werden, welches seine Form bereits bei geringer Belastung ändert. Ein hervorzuhebendes Beispiel stellen Armlehnen von Fahrzeugtüren von Kraftfahrzeugen dar, die deshalb weich ausgeführt werden, um den Insassen des Kraftfahrzeugs das Auflegen des Arms auf die Armlehne so angenehm wie möglich zu machen.

Derartige geschäumte Interieur-Bauteile werden in Formwerkzeugen gefertigt, welche ein Oberwerkzeug, und ein Unterwerkzeug aufweisen, wobei das Oberwerkzeug und das Unterwerkzeug relativ zueinander zwischen einer Offenstellung, in welcher ein Schaummaterial in das Formwerkzeug einbringbar ist, und einer Schließstellung, in welcher das Oberwerkzeug und das Unterwerkzeug eine Kavität zum Formen des Interieur-Bauteils bilden, bewegbar sind. Das Schaummaterial expandiert in der Kavität und härtet aus, wobei es die Form der Kavität annimmt, wodurch das fertige Interieur-Bauteil entsteht. Danach wird die Vorrichtung zurück in die Offenstellung bewegt, in welcher das fertige Interieur-Bauteil entformt und aus der Vorrichtung entnommen werden kann. Eine derartige Vorrichtung ist in der DE 10 2016 203 402 A1, der DE 11 2013 000 921 T5, der US 4 968 465 A, der DE 37 24 316 A1, der DE 601 18 614 T2, der DE 10 2013 224 656 A1, der US 2011 0159136 A1, der EP 2 907 643 A1, der WO 2010/139307 A2 und der EP 1 857 245 A2 offenbart.

Beim Entformen, also beim Trennen des fertigen Interieur-Bauteils vom Oberwerkzeug oder vom Unterwerkzeug, die üblicherweise aus Metall wie Aluminium gefertigt sind, kommt es häufig vor, dass Teile des Schaummaterials bzw. des Interieur-Bauteils am Oberwerkzeug oder am Unterwerkzeug anhaften und folglich das Interieur-Bauteil eine Anzahl von unerwünschten Fehlstellen aufweist. Um dies zu vermeiden, wird das Entformen unter Verwendung eines Trennmittels vorgenommen, welches verhindert, dass Teile des Schaummaterials am Oberwerkzeug oder am Unterwerkzeug haften bleiben. Allerdings sind für den Einsatz und für das anschließende Entfernen des Trennmittels vom Formwerkzeug und vom Interieur-Bauteil zusätzliche, kaum automatisierbare Arbeitsschritte notwendig. Hierdurch wird die Dauer des Herstellungsprozesses verlängert, was sich neben den Kosten für das Trennmittel selbst kostenerhöhend auf das Interieur-Bauteil auswirkt.

Um dieser Situation entgegenzuwirken, werden sogenannte Trennschalen eingesetzt. Die Trennschalen werden in das Oberwerkzeug und/oder in das Unterwerkzeug eingelegt und bilden zumindest einen Teil der Kavität, so dass sie mit dem Schaummaterial bzw. dem hieraus entstehenden fertigen Interieur-Bauteil in Kontakt treten. Die Trennschalen sind typischerweise aus Kunststoff gefertigt, deren Oberfläche eine Antihaftbeschichtung aufweist. Hierdurch wird das Anhaften von Teilen des Schaummaterials bzw. des fertigen Interieur-Bauteils verhindert, so dass das Entformen ohne Trennmittel erfolgen kann, ohne dass das fertige Interieur-Bauteil die oben erwähnten Fehlstellen aufweist.

Wie erwähnt, werden die Trennschalen in das Oberwerkzeug und/oder in das Unterwerkzeug des Formwerkzeugs eingelegt. Das Oberwerkzeug, das Unterwerkzeug und die Trennschalen selbst sind bestimmten Fertigungstoleranzen unterworfen. Beim Schlie-ßen des Formwerkzeugs kann es nicht ausgeschlossen werden, dass die Trennschalen mechanisch belastet und insbesondere komprimiert und elastisch oder plastisch verformt werden. Aufgrund der mechanischen Belastung kann es mit der Zeit zu einem Verschleiß und zu Beschädigungen der Trennschale kommen, die sich letztlich nur an fehlerhaften Interieur-Bauteilen feststellen lassen. Die Trennschale muss ausgetauscht werden und die fehlerhaften Interieur-Bauteile sind Ausschuss, was sich nachteilig auf die Produktivität des betreffenden Formwerkzeugs auswirkt.

Aufgabe einer Ausführungsform der vorliegenden Erfindung ist es, ein Formwerkzeug zum Herstellen eines geschäumten Interieur-Bauteils für ein Kraftfahrzeug anzugeben, mit welchem es mit einfachen und kostengünstigen Mitteln möglich ist, den Verschleiß und Beschädigungen der Trennschale zu reduzieren. Des Weiteren liegt einer nicht Erfindungsgemäßen Ausgestaltung die Aufgabe zugrunde, ein Interieur-Bauteil zu schaffen, welches mit einem derartigen Formwerkzeug hergestellt ist. Darüber hinaus liegt eine nicht Erfindungsgemäßen Ausbildung die Aufgabe zugrunde, ein Kraftfahrzeug mit einem derartigen Interieur-Bauteil bereitzustellen.

Diese Aufgabe wird mit den in Anspruch 1 angegebenen Merkmalen gelöst. Vorteilhafte Ausführungsformen sind Gegenstand der Unteransprüche.

Eine Ausführungsform der Erfindung betrifft ein Formwerkzeug zum Herstellen eines geschäumten Interieur-Bauteils für ein Kraftfahrzeug, umfassend
- ein Oberwerkzeug,
- ein Unterwerkzeug, wobei
- das Oberwerkzeug und das Unterwerkzeug relativ zueinander zwischen einer Offenstellung, in welcher ein Schaummaterial in das Formwerkzeug einbringbar ist, und einer Schließstellung, in welcher das Oberwerkzeug und das Unterwerkzeug eine Kavität zum Formen des Interieur-Bauteils bilden, bewegbar sind,
- zumindest eine Trennschale mit einer Oberfläche mit einer Antihaftbeschichtung, welche im Oberwerkzeug und/oder im Unterwerkzeug angeordnet ist und welche die Kavität zumindest teilweise bildet, und
- zumindest ein elastisches Element, welches
   zwischen dem Unterwerkzeug und der Trennschale angeordnet ist und eine Relativbewegung zwischen dem Unterwerkzeug und der Trennschale zulässt, und/oder zwischen dem Oberwerkzeug und der Trennschale angeordnet ist und eine Relativbewegung zwischen dem Oberwerkzeug und der Trennschale zulässt.

Das elastische Element bewirkt, dass eine Relativbewegung zwischen dem Unterwerkzeug und der Trennschale und/oder dem Oberwerkzeug und der Trennschale ermöglicht wird. Steht beispielsweise die Trennschale aufgrund der oben bereits erwähnten Fertigungstoleranzen etwas über das Unterwerkzeug hervor, kann die Trennschale beim Schließen des Formwerkzeugs dann, wenn das Oberwerkzeug mit der Trennschale in Kontakt tritt, in das Unterwerkzeug hinein bewegt werden. Infolgedessen bewirkt das elastische Element eine Art Abfederung, so dass nicht die Trennschale, sondern das elastische Element verformt wird. Hierdurch wird die mechanische Belastung der Trennschale verringert, wodurch der Verschleiß und die Beschädigung der Trennschale reduziert werden. Hieraus folgt, dass die betreffende Trennschale länger verwendet werden kann und daher seltener ausgetauscht werden muss. Die Anzahl der Interieur-Bauteile, welche wegen Ausschuss vernichtet werden müssen, wird ebenfalls reduziert, so dass die Produktivität des betreffenden Formwerkzeugs gesteigert wird.

Nach Maßgabe einer weiteren Ausführungsform weisen das Oberwerkzeug und/oder das Unterwerkzeug eine Anzahl von Aufnahmeabschnitten zum Aufnehmen des elastischen Elements auf. Das Vorsehen von Aufnahmeabschnitten bewirkt eine Positionierung der elastischen Elemente, wodurch verhindert wird, dass sich diese im Betrieb des Formwerkzeugs verschieben. Aus einer derartigen Verschiebung resultierende fehlerhafte Ausrichtungen der Trennschale, welche ebenfalls zu fehlerhafte Interieur-Bauteile führen, können verhindert werden.

Erfindungsgemäß ist das elastische Element als eine Schnur ausgebildet. Im Vergleich zu Federn und Gummidämpfern bewirkt eine Schnur je nach verwendeter Länge eine großflächige Auflage der Trennschale auf dem Oberwerkzeug oder dem Unterwerkzeug, so dass die elastische Wirkung entsprechend großflächig verteilt werden kann. Punktuelle Belastungen der Trennschale infolge der Einwirkung des Oberwerkzeugs und/oder des Unterwerkzeugs können verhindert werden.

Nach Maßgabe der Erfindung ist die Schnur als eine Dichtschnur ausgebildet. Wie erwähnt, wird das Interieur-Bauteil aus einem Schaummaterial hergestellt, welches in die Kavität eingebracht wird, dort expandiert und ausgehärtet. Beim Expandieren kann das Schaummaterial auch aus der Kavität austreten, sofern das Oberwerkzeug und das Unterwerkzeug die Kavität nicht exakt abdichten. Folglich kann es auch passieren, dass das Schaummaterial in Spalte zwischen der Trennschale und dem Oberwerkzeug oder zwischen der Trennschale und dem Unterwerkzeug eintritt und dort aushärtet. Hierdurch kann es zu einer fehlerhaften Ausrichtung der Trennschale im Formwerkzeug kommen, wodurch die dann produzierten Interieur-Bauteile fehlerhaft sind und nicht mehr verwendet werden können.

Dadurch, dass in dieser Ausführungsform die Schnur als eine Dichtschnur ausgebildet ist, kann das Eindringen des Schaumaterials in Spalte zwischen der Trennschale und dem Oberwerkzeug oder zwischen der Trennschale und dem Unterwerkzeug zumindest begrenzt werden, so dass die Gefahr von Fehlstellungen, die von in diesen Spalten ausgehärteten Schaummaterial ausgeht, reduziert wird.

Erfindungsgemäß ist die Dichtschnur geschlossen ausgebildet. Wie bereits erwähnt, kann die beim Schließen des Formwerkzeugs auf die Trennschale wirkende Belastung unter Verwendung einer Schnur oder einer Dichtschnur vergleichmäßigt werden. Wenn die Schnur oder die Dichtschnur geschlossen ausgebildet ist und damit keine Unterbrechungen aufweist, kann diese Vergleichmäßigung maximiert werden. Die Gefahr des Eindringens von Schaummaterial in die Spalte zwischen der Trennschale und dem Oberwerkzeug oder zwischen der Trennschale und dem Unterwerkzeug kann sehr weitreichend verhindert werden.

Erfindungsgemäß weisen das Oberwerkzeug und/oder das Unterwerkzeug Vakuumlöcher zum Anlegen eines Vakuums im Formwerkzeug auf, wobei die Dichtschnur die Vakuumlöcher zumindest teilweise umschließt. Das Anlegen eines Vakuums in einem Druckraum im Formwerkzeug wird dazu verwendet, die Trennschale am Oberwerkzeug oder am Unterwerkzeug zu fixieren. Hierzu weist das Unterwerkzeug oder das Oberwerkzeug entsprechende Dichtkanten auf, an welchen das Unterwerkzeug und/oder das Oberwerkzeug an der Trennschale anliegen und welche eine Abdichtung der Trennschale gegenüber dem Unterwerkzeug und/oder gegenüber dem Oberwerkzeug bewirken.

Allerdings tritt auch hier das Problem auf, dass aufgrund der Fertigungstoleranzen die Abdichtung nicht vollständig garantiert werden kann. Zudem treten gerade an den Dichtkanten erhöhte mechanische Belastungen der Trennschale auf, so dass hier die Wahrscheinlichkeit von Beschädigungen der Trennschale besonders hoch ist. Dadurch, dass vorschlagsgemäß die Dichtschnur die Vakuumlöcher zumindest teilweise umgibt, kann die Abdichtung zwischen der Trennschale und dem Oberwerkzeug oder zwischen der Trennschale und dem Unterwerkzeug mittels der Dichtschnur erfolgen, so dass zumindest teilweise auf Dichtkanten verzichtet werden kann. Hierdurch wird einerseits die Abdichtung verbessert und andererseits die mechanische Belastung der Trennschale verringert.

Eine weitere Ausführungsform zeichnet sich dadurch aus, dass die Dichtschnur als eine Silikonschnur ausgebildet ist. Es hat sich gezeigt, dass die Verwendung von Silikon als Material für die Dichtschnur besonders geeignet ist. Zudem lassen sich Dichtschnüre aus Silikon besonders kostengünstig bereitstellen. Die Dichtschnüre können eine Shorehärte von 30 ± 5 aufweisen.

Nach Maßgabe einer weiteren Ausführungsform weist die Schnur einen Durchmesser von 1,5 bis 2,5 mm und insbesondere zwischen 1,9 und 2,1 mm auf. Unabhängig davon, ob die Schnur als Dichtschnur, als Silikonschnur oder als eine anders ausgebildete Schnur ausgebildet ist, hat sich gezeigt, dass im angegebenen Durchmesserbereich die im Betrieb des Formwerkzeugs auftretenden Belastungen der Trennschale besonders wirkungsvoll reduziert werden können. Zudem können die Schnüre, die einen Durchmesser im angegebenen Bereich aufweisen, auf einfache Weise in bereits existierende Formwerkzeuge eingelegt werden, ohne dass diese in ihrer Form verändert werden müssen. Insofern lassen sich bestehende Formwerkzeuge ohne weitere Maßnahmen vorschlagsgemäß nachrüsten.

Eine nicht Erfindungsgemäßen Ausgestaltung betrifft ein Interieur-Bauteil für ein Kraftfahrzeug, hergestellt mittels eines Formwerkzeugs nach einem der vorherigen Ausführungsformen. Die technischen Effekte und Vorteile, die sich mit dem vorschlagsgemäßen Interieur-Bauteil erreichen lassen, entsprechen denjenigen, die für das vorliegende Formwerkzeug erörtert worden sind. Zusammenfassend sei darauf hingewiesen, dass mit dem vorschlagsgemäßen Formwerkzeug die mechanische Belastung der Trennschale verringert werden kann, wodurch der Verschleiß und Beschädigungen der Trennschale reduziert werden. Hieraus folgt, dass die betreffende Trennschale länger verwendet werden kann und daher seltener ausgetauscht werden muss. Die Anzahl der Interieur-Bauteile, welche wegen Ausschuss vernichtet werden müssen, wird ebenfalls reduziert, so dass die Produktivität des betreffenden Formwerkzeugs gesteigert wird. Die Kosten für ein auf die vorschlagsgemäße Weise hergestelltes Interieur-Bauteil werden folglich gegenüber Interieur-Bauteile, die mit bekannten Formwerkzeugen hergestellt werden, verringert.

Bei einer weiteren nicht Erfindungsgemäßen Ausgestaltung ist vorgesehen, dass das geschäumte Interieur-Bauteil zumindest einen Teil einer Armlehne einer Fahrzeugtür des Kraftfahrzeugs bildet. Je nach verwendetem Schaummaterial kann der Schaumabschnitt weich ausgeführt werden. Folglich kann die Armlehne mit einem erhöhten Komfort für die Insassen des Fahrzeugs ausgeführt werden.

Eine nicht Erfindungsgemäßen Ausbildung betrifft ein Kraftfahrzeug, insbesondere eine Fahrzeugtür eines Kraftfahrzeugs, umfassend ein Interieur-Bauteil nach einem der zuvor offenbarten Ausgestaltungen.

Die technischen Effekte und Vorteile, die sich mit dem vorschlagsgemäßen Kraftfahrzeug erreichen lassen, entsprechen denjenigen, die für das vorliegende Formwerkzeug erörtert worden sind. Zusammenfassend sei darauf hingewiesen, dass aufgrund der reduzierten mechanischen Belastung der Trennschale im Betrieb des Formwerkzeugs im Vergleich zu aus dem Stand der Technik bekannten Formwerkzeugen die Trennschale weniger häufig ausgetauscht werden muss und die Anzahl von fehlerhaften Interieur-Bauteilen reduziert wird. Da hierdurch die Kosten für das betreffende Interieur-Bauteil reduziert werden können, können auch die Kosten für das Kraftfahrzeug bzw. der Fahrzeugtür des betreffenden Kraftfahrzeugs reduziert werden.

Beispielhafte Ausführungsformen der Erfindung werden im Folgenden unter Bezugnahme auf die beigefügten Zeichnungen näher erläutert. Es zeigen
- Figur 1A: ein erstes Ausführungsbeispiel eines erfindungsgemäßen Formwerkzeugs,
- Figur 1B: ein im in Figur 1A dargestellten Formwerkzeug verwendetes elastisches Element anhand einer separaten Draufsicht,
- Figur 2: ein zweites Ausführungsbeispiel eines nicht erfindungsgemäßen Formwerkzeugs,
- Figuren 3A bis 3F: verschiedene Schritte der Herstellung eines Interieur-Bauteils mit dem in Figur 1A dargestellten Formwerkzeugs, jeweils anhand einer prinzipiellen Schnittdarstellung,
- Figur 4: ein Kraftfahrzeug mit einer Fahrzeugtür, welche ein nach den Figuren 3A bis 3F hergestelltes InterieurBauteil aufweist, anhand einer prinzipiellen Seitenansicht, und
- Figur 5: die Fahrzeugtür des in Figur 4 dargestellten Kraftfahrzeugs anhand einer perspektivischen Darstellung.

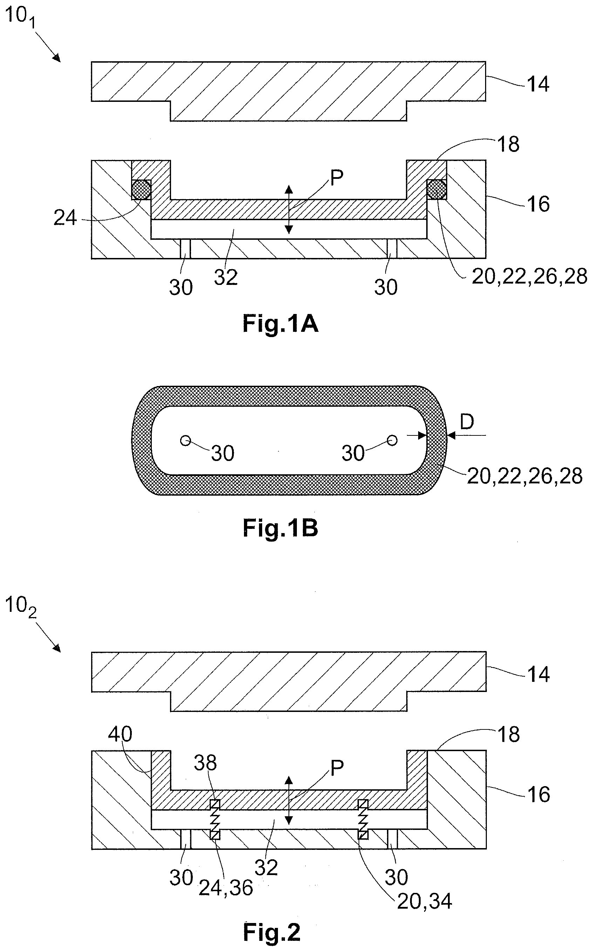

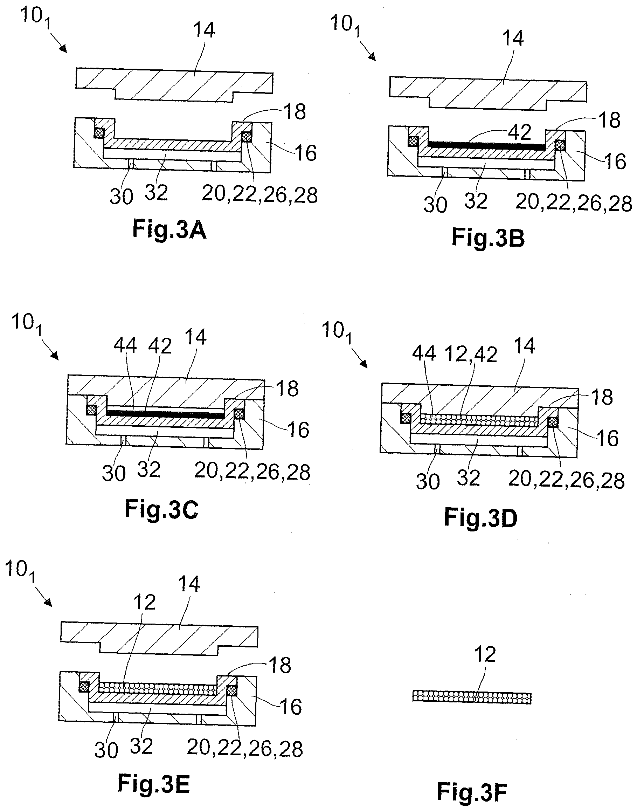

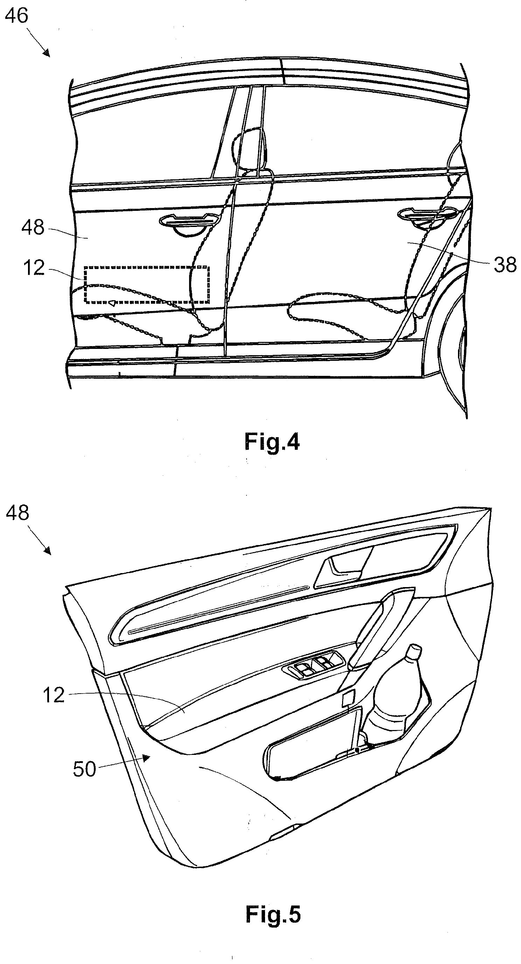

In Figur 1A ist ein erstes Ausführungsbeispiel eines erfindungsgemäßen Formwerkzeugs 10₁ anhand einer prinzipiellen Schnittdarstellung gezeigt. Das Formwerkzeug 10₁ dient zur Herstellung eines Interieur-Bauteils 12, welches prinzipiell in den Figuren 3F und 4, sowie perspektivisch in Figur 5 dargestellt ist.

Das Formwerkzeug 10₁ nach dem ersten Ausführungsbeispiel umfasst ein Oberwerkzeug 14 und ein Unterwerkzeug 16, welche relativ zueinander zwischen einer Offenstellung und einer Schließstellung bewegbar sind, worauf noch genauer eingegangen wird. An dieser Stelle sei nur darauf hingewiesen, dass in Figur 1A das Formwerkzeug 10₁ in der Offenstellung dargestellt ist. Das Formwerkzeug 10₁ weist eine Trennschale 18 auf, welche im ersten Ausführungsbeispiel des Formwerkzeugs 10₁ in das Unterwerkzeug 16 eingelegt ist. Zwischen dem Unterwerkzeug 16 und der Trennschale 18 ist ein elastisches Element 20 angeordnet, welches als eine Schnur 22 ausgeführt ist. Die Schnur 22 ist in einem Aufnahmeabschnitt 24 des Unterwerkzeugs 16 angeordnet, der von einer Stufe des Unterwerkzeugs 16 gebildet wird. Die Aufnahmeabschnitte 24 positionieren und fixieren die Schnur 22. Die Schnur 22 ist als eine Dichtschnur 26, die als eine Silikonschnur 28 ausgebildet ist, ausgeführt. Die Schnur 22 liegt sowohl am Unterwerkzeug 16 als auch an der Trennschale 18 an und dichtet diese gegeneinander ab.

In Figur 1B ist die Dichtschnur 26 separat dargestellt. Man erkennt, dass die Dichtschnur 26 einen Durchmesser D D aufweist, welcher zwischen 1,5 und 2,5 mm, beispielsweise 2 mm betragen kann. Weiterhin ist aus Figur 1B zu erkennen, dass die Dichtschnur 26 umlaufend ausgeführt ist und daher keine Unterbrechungen aufweist.

Aus Figur 1A ist weiterhin ersichtlich, dass im Unterwerkzeug 16 eine Anzahl von Vakuumlöchern 30 angeordnet ist, welche ein Vakuum oder zumindest ein Unterdruck zwischen dem Unterwerkzeug 16 und der Trennschale 18 erzeugen können. Hierdurch wird die Trennschale 18 zum Unterwerkzeug 16 gezogen und folglich am Unterwerkzeug 16 befestigt. In der Draufsicht umschließt das elastische Element 20 die Vakuumlöcher 30, so dass ein Druckraum 32, in welchem sich das Vakuum oder der Unterdruck bilden kann, vom elastischen Element 20 begrenzt wird. Aus Darstellungsgründen sind in Figur 1B die Vakuumlöcher 30 ebenfalls dargestellt. Dadurch, dass das elastische Element 20 als eine Dichtschnur 26 ausgeführt ist und die Trennschale 18 gegenüber dem Unterwerkzeug 16 abdichtet, wird gewährleistet, dass sich der Unterdruck oder das Vakuum im Druckraum 32 zwischen der Trennschale 18 und dem Unterwerkzeug 16 ausbilden kann.

Aufgrund der Tatsache, dass das elastische Element 20 elastisch verformbar ist, kann die Trennschale 18 bei einer entsprechenden Belastung gegenüber dem Unterwerkzeug 16 entlang der mit dem Pfeil P gekennzeichneten Richtung bewegt werden, worauf später noch genauer eingegangen wird.

In Figur 2 ist ein nicht zur Erfindung gehöriges zweites Ausführungsbeispiel des Formwerkzeugs 10₂ ebenfalls anhand einer prinzipiellen Schnittdarstellung gezeigt. Der wesentliche Aufbau des Formwerkzeugs 10₁ nach dem ersten Ausführungsbeispiels entspricht demjenigen des Formwerkzeugs 10₂ nach dem zweiten Ausführungsbeispiel, weshalb im Folgenden nur auf die Unterschiede eingegangen wird. Gemäß dem zweiten Ausführungsbeispiel des Formwerkzeugs 10₁ sind die elastischen Elemente 20 als zwei Federn 34 ausgebildet, welche zwischen der Trennschale 18 und dem Unterwerkzeug 16 angeordnet sind. Auch im zweiten Ausführungsbeispiel des nicht erfindungsgemäßen Formwerkzeugs 10₂ weist das Unterwerkzeug 16 die Aufnahmeabschnitte 24 auf, die in diesem Fall als Vertiefungen 36 ausgeführt sind, in welche die Federn 34 mit einem ersten Ende hineinragen. Die Trennschale 18 weist entsprechende Ausnehmungen 38 auf, in welche die Federn 34 mit dem gegenüberliegenden zweiten Ende hineinragen. Hierdurch wird die Position der Federn 34 definiert und fixiert.

Im zweiten Ausführungsbeispiel des nicht erfindungsgemäßen Formwerkzeugs 10₂ weisen die elastischen Elemente 20 keine dichtende Funktion auf, weshalb diese in Bezug auf die Vakuumlöcher 30 beliebig zwischen der Trennschale 18 und dem Unterwerkzeug 16 angeordnet werden können. Die Abdichtung der Trennschale 18 gegenüber dem Unterwerkzeug 16 erfolgt mit Dichtkanten 40, welche eine entsprechend große Dichtfläche bereitstellen. Auch im zweiten Ausführungsbeispiel des Formwerkzeugs 10₁ ist eine Relativbewegung der Trennschale 18 in Bezug auf das Unterwerkzeug 16 entlang der mit dem Pfeil P gekennzeichneten Richtung möglich.

In den Figuren 3A bis 3F sind verschiedene Schritte zum Herstellen eines Interieur-Bauteils 12 mit dem erfindungsgemäßen Formwerkzeug 10₁ nach dem ersten Ausführungsbeispiel prinzipiell dargestellt. In Figur 3A befindet sich das Formwerkzeug 10₁ in der Offenstellung, die auch in der Figur 1A dargestellt ist. Über nicht dargestellte Vakuum-Mittel ist ein Vakuum oder ein Unterdruck im Druckraum 32 zwischen dem Unterwerkzeug 16 und der Trennschale 18 angelegt. Die Trennschale 18 ist folglich gegenüber dem Unterwerkzeug 16 in seiner Position fixiert.

Wie aus Figur 3B erkennbar, wird ein Schaummaterial 42 über nicht dargestellte Zuführmittel in die Trennschale 18 gegeben. Das Schaummaterial 42 ist üblicherweise flüssig, so dass das Zuführmittel einen Schlauch umfassen kann, durch welches das Schaummaterial 42 in die Trennschale 18 gegossen werden kann.

Im nächsten Schritt, welcher in Figur 3C dargestellt ist, wird das Oberwerkzeug 14 auf das Unterwerkzeug 16 zu bewegt, bis dass das Oberwerkzeug 14 und das Unterwerkzeug 16 aneinander anschlagen. Nun befindet sich das Formwerkzeug 10₁ in einer Schließstellung, in welcher das Oberwerkzeug 14 und das Unterwerkzeug 16 eine Kavität 44 bilden. Aufgrund der Tatsache, dass die Trennschale 18 im Unterwerkzeug 16 angeordnet ist, wird die Kavität 44 nicht direkt vom Unterwerkzeug 16, sondern teilweise von der Trennschale 18 gebildet, die vom Oberwerkzeug 14 verschlossen wird. Das Schaummaterial 42 befindet sich in der Kavität 44.

Das Schaummaterial 42 expandiert nun und härtet aus, wie in Figur 3D dargestellt. Das Expandieren und Aushärten können beispielsweise mittels einer Temperaturerhöhung im Formwerkzeug 10₁ ausgelöst werden. Aufgrund der Tatsache, dass die Kavität 44 von der im Unterwerkzeug 16 angeordneten Trennschale 18 und dem Oberwerkzeug 14 begrenzt wird, kann sich das Schaummaterial 42 nur innerhalb der Kavität 44 ausbreiten. Nachdem das Schaummaterial 42 ausgehärtet ist, nimmt das Schaummaterial 42 dauerhaft die Form der Kavität 44 an und bildet ein Interieur-Bauteil 12.

Wie in Figur 3E dargestellt, wird nun das Formwerkzeug 10₁ wieder in die Offenstellung überführt, wozu das Oberwerkzeug 14 vom Unterwerkzeug 16 weg bewegt wird. Das Interieur-Bauteil 12 kann nun aus dem Formwerkzeug 10₁ entnommen werden. Das Trennen des Interieur-Bauteils 12 von der Trennschale 18 kann ohne den Einsatz eines Trennmittels erfolgen, weil die Trennschale 18 eine Oberfläche mit einer Antihaftbeschichtung aufweist. In Figur 3F ist das aus dem Formwerkzeug 10₁ entnommene Interieur-Bauteil 12 separat dargestellt.

An dieser Stelle soll nochmals auf die erfindungsgemäße Wirkung des elastischen Elements 20 eingegangen werden. Wie bereits erwähnt, dichtet das elastische Element 20 des Formwerkzeugs 10₁ den Druckraum 32 zwischen der Trennschale 18 und dem Unterwerkzeug 16 ab. Darüber hinaus hat das elastische Element 20 den folgenden weiteren Effekt: Beispielsweise bezugnehmend auf die Figuren 3A und 3B ist zu erwähnen, dass entgegen der dortigen Darstellung die Trennschale 18 an ihrer zum Oberwerkzeug 14 hinzeigenden Oberfläche nicht exakt fluchtend mit dem Unterwerkzeug 16 abschließt. Vielmehr kann die Trennschale 18 mehr oder weniger weit zum Oberwerkzeug 14 hin über das Unterwerkzeug 16 vorstehen. Wird das Formwerkzeug 10₁ in die Schließstellung überführt, wie beispielsweise in den Figuren 3C und 3D dargestellt, tritt das Oberwerkzeug 14 zunächst mit der Trennschale 18 in Kontakt. Aufgrund der Tatsache, dass die elastischen Elemente 20 verformbar sind, wird hierbei die Trennschale 18 etwas zum Unterwerkzeug 16 hin bewegt, infolgedessen die elastischen Elemente 20 insbesondere elastisch verformt werden und nicht die Trennschale 18. Im Vergleich zu einer aus dem Stand der Technik bekannten Ausführungsform eines Formwerkzeugs, die keine elastischen Elemente 20 aufweist, wird die mechanische Belastung der Trennschale 18 deutlich reduziert und auf die elastischen Elemente 20 verlagert. Infolgedessen werden Beschädigungen und Verschleiß an der Trennschale 18 deutlich verringert, so dass die Trennschale 18 länger verwendet werden kann.

In Figur 4 ist ein Kraftfahrzeug 46 anhand einer prinzipiellen Seitenansicht gezeigt, welches ein nicht erfindungsgemäßes Interieur-Bauteil 12 aufweist, das in einer Fahrzeugtür 48 des Kraftfahrzeugs 46 angeordnet ist.

In Figur 5 ist eine der Fahrzeugtüren 48 des Kraftfahrzeugs 46 anhand einer perspektivischen Ansicht gezeigt, in diesem Fall die vordere linke Fahrzeugtür 48. Man erkennt, dass das Interieur-Bauteil 12 eine Armlehne 50 der Fahrzeugtür 48 bildet.

### Bezugszeichenliste

- 10: Formwerkzeug
- 10₁,: 10₂ Formwerkzeug
- 12: Interieur-Bauteil
- 14: Oberwerkzeug
- 16: Unterwerkzeug
- 18: Trennschale
- 20: elastisches Element
- 22: Schnur
- 24: Aufnahmeabschnitt
- 26: Dichtschnur
- 28: Silikonschnur
- 30: Vakuumloch
- 32: Druckraum
- 34: Feder
- 36: Vertiefung
- 38: Ausnehmung
- 40: Dichtkante
- 42: Schaummaterial
- 44: Kavität
- 46: Kraftfahrzeug
- 48: Fahrzeugtür
- 50: Armlehne

- D: Durchmesser
- P: Pfeil

## Patentansprüche

1. Formwerkzeug (10) zum Herstellen eines geschäumten Interieur-Bauteils (12) für ein Kraftfahrzeug (46), umfassend
- ein Oberwerkzeug (14),
- ein Unterwerkzeug (16), wobei
- das Oberwerkzeug (14) und das Unterwerkzeug (16) relativ zueinander zwischen einer Offenstellung, in welcher ein Schaummaterial (42) in das Formwerkzeug (10) einbringbar ist, und einer Schließstellung, in welcher das Oberwerkzeug (14) und das Unterwerkzeug (16) eine Kavität (44) zum Formen des Interieur-Bauteils (12) bilden, bewegbar sind,
- zumindest eine Trennschale (18) mit einer Oberfläche mit einer Antihaftbeschichtung, welche im Oberwerkzeug (14) und/oder im Unterwerkzeug (16) angeordnet ist und welche die Kavität (44) zumindest teilweise bildet, und
- zumindest ein elastisches Element (20), welches
zwischen dem Unterwerkzeug (16) und der Trennschale (18) angeordnet ist und eine Relativbewegung zwischen dem Unterwerkzeug (16) und der Trennschale (18) zulässt, und/oder
zwischen dem Oberwerkzeug (14) und der Trennschale (18) angeordnet ist und eine Relativbewegung zwischen dem Oberwerkzeug (14) und der Trennschale (18) zulässt,
**dadurch gekennzeichnet, dass**
- das elastische Element (20) als eine geschlossene Dichtschnur (22, 26) ausgebildet ist und
- das Oberwerkzeug (14) und/oder das Unterwerkzeug (16) Vakuumlöcher (30) zum Anlegen eines Vakuums im Formwerkzeug (10) aufweisen und die Dichtschnur (26) die Vakuumlöcher (30) zumindest teilweise umschließt.

2. Formwerkzeug (10) nach Anspruch 1,
**dadurch gekennzeichnet, dass** das Oberwerkzeug (14) und/oder das Unterwerkzeug (16) eine Anzahl von Aufnahmeabschnitten (24) zum Aufnehmen des elastischen Elements (20) aufweisen.

3. Formwerkzeug (10) nach einem der vorherigen Ansprüche,
**dadurch gekennzeichnet, dass** die Dichtschnur (26) als eine Silikonschnur (28) ausgebildet ist.

4. Formwerkzeug (10) nach einem der vorherigen Ansprüche,
**dadurch gekennzeichnet, dass** die Dichtschnur (26) einen Durchmesser von 1,5 bis 2,5 mm und insbesondere zwischen 1,9 und 2,1 mm aufweist.

## Claims

1. Molding tool (10) for manufacturing a foamed interior component (12) for a motor vehicle (46), comprising
- an upper die (14),
- a lower die (16), wherein
- the upper die (14) and the lower die (16) are movable relative to each other between an open position, in which a foam material (42) can be brought into the molding tool (10), and a closed position, in which the upper die (14) and the lower die (16) form a cavity (44) for forming the interior component (12),
- at least one separation tray (18), having a surface with a non-stick coating, and which is arranged in the upper die (14) and/or the lower die (16) to form, at least partially, the cavity (44), and
- at least one elastic element (20), which
is arranged between the lower die (16) and the separation tray (18) and allows for a relative movement between the lower die (16) and the separation tray (18), and/or
is arranged between the upper die (14) and the separation tray (18) and allows for a relative movement between the upper die (14) and the separation tray (18),
**characterized in that**
- the elastic element (20) is implemented as a closed sealing cord (22, 26) and
- the upper die (14) and/or the lower die (16) comprise(s) vacuum holes (30) for producing a vacuum in the molding tool (10) and **in that** the sealing cord (26) at least partially encloses the vacuum holes (30).

2. Molding tool (10) in accordance with claim 1,
**characterized in that** the upper die (14) and/or the lower die (16) comprise numerous receiving sections (24) for receiving the elastic element (20).

3. Molding tool (10) in accordance with either of the preceding claims,
**characterized in that** the sealing cord (26) is implemented as a silicone chord (28).

4. Molding tool (10) in accordance with any of the preceding claims,
**characterized in that** the sealing cord (26) comprises a diameter of 1.5 to 2.5 mm, in particular, between 1.9 and 2.1 mm.

## Revendications

1. Outil de moulage (10) pour réaliser un composant intérieur, expansé, (12) pour un véhicule automobile (46) comprenant :
- un outil supérieur (14),
- un outil inférieur (16),
- l'outil supérieur (14) et l'outil inférieur (16) étant mobiles l'un par rapport à l'autre entre une position ouverte dans laquelle on peut introduire une matière expansible (42) dans l'outil de moulage (10) et une position fermée dans laquelle l'outil supérieur (14) et l'outil inférieur (16) constituent une cavité (44) pour former le composant intérieur (12),
- au moins une coque séparatrice (18) avec une surface ayant un revêtement antiadhérent dans l'outil supérieur (14) et/ou dans l'outil inférieur (16) et qui forme au moins en partie la cavité (44), et
- au moins un élément élastique (20) entre l'outil inférieur (16) et la coque (18) et permettant un mouvement relatif entre l'outil inférieur (16) et la coque (18) et/ou entre l'outil supérieur (14) et la coque (18) et un mouvement relatif entre l'outil supérieur (14) et la coque (18),
outil **caractérisé en ce que**
- l'élément élastique (20) est un cordon d'étanchéité (22, 26) fermé, et
- l'outil supérieur (14) et/ou l'outil inférieur (16) comportent des orifices de vide (30) pour appliquer un vide à l'outil de moulage (10) et le cordon d'étanchéité (26) entoure au moins en partie les orifices de vide (30).

2. Outil de moulage (10) selon la revendication 1,
**caractérisé en ce que**
l'outil supérieur (14) et/ou l'outil inférieur (16) ont un certain nombre de segments de réception (24) pour recevoir l'élément élastique (20).

3. Outil de moulage (10) selon l'une des revendications précédentes,
**caractérisé en ce que**
le cordon d'étanchéité (26) est un cordon de silicone (28).

4. Outil de moulage (10) selon l'une des revendications précédentes,
**caractérisé en ce que**
le cordon d'étanchéité (26) a un diamètre de 1,5 à 2,5 mm et notamment un diamètre compris entre 1,9 et 2,1 mm.
